# EUROPEAN PATENT APPLICATION

(11) **EP 2 889 550 A1**
(43) Date of publication of application: **01.07.2015**
(21) Application number: 14177219.4
(22) Date of filing: 16.07.2014
(51) Int. Cl.: F25B 5/00, F25B 47/02, F25D 11/02

(54) **Cooling apparatus for refrigerator and control method thereof**

(30) Priority: 26.12.2013 KR 20130163575
(71) Applicant: Dongbu Daewoo Electronics Corporation, Seoul 100-769 (KR)
(72) Inventor: YUN, Young Hyun, 100-769 Seoul (KR)
(74) Representative: Bösl, Raphael Konrad

(57) **Abstract**

A cooling apparatus for a refrigerator includes a compressor (110) configured to compress a refrigerant, a condenser (140) configured to condense the compressed refrigerant, a decompressor (130) configured to decompress the condensed refrigerant, an evaporator (140) configured to evaporate the decompressed refrigerant and generate cold air inside the refrigerator, a defrosting flow path (150) including a first end connected to a refrigerant flow path between the compressor (110) and the condenser (120), and a second end connected to the refrigerant flow path between the decompressor (130) and the evaporator (140), and a flow path switching valve (160) configured to selectively direct the compressed refrigerant from the compressor (110) to the defrosting flow path (150) or to the condenser (120).

## Description

### CROSS-REFERENCE TO RELATED APPLICATIONS

This application is based on and claims priority from Korean Patent Application No. 10-2013-0163575, filed on December 26, 2013, the disclosure of which is incorporated herein in its entirety by reference.

### TECHNICAL FIELD

The present disclosure relates to a cooling apparatus for a refrigerator and a control method thereof.

### BACKGROUND

In general, a refrigerator is a device for storing food and/or beverages at low temperatures. The refrigerator is configured to keep the food and/or beverages under refrigeration or in a freezer, for which the refrigerator includes a cooling apparatus to perform a cooling cycle.

While a refrigerant is repeatedly circulated in the cooling cycle, consisting of compression, condensation, expansion (decompression), and evaporation, cold air is generated. The cold air is supplied evenly inside the refrigerator by convection, thereby keeping the food under a low temperature condition in the refrigerator. A main body of the refrigerator may have a rectangular parallelepiped shape having an opening at the front, and a refrigeration compartment and a freezer compartment inside the main body. Also, a door for the refrigeration compartment and a door for the freezer close the opening of the main body.

An evaporator is a component related to the cooling cycle that is configured to provide heat exchange between the refrigerant and the air inside the refrigerator. The reason that the temperature of the surface of the evaporator is lower than the ambient temperature surrounding the refrigerator, thus water condenses on the surface of the evaporator during the operation of the heat exchange between the refrigerant and the air inside the refrigerator. Furthermore, the condensed water freezes on the surface of the evaporator and turns to frost. When the frost accumulates on the surface of the evaporator, efficiency of the heat exchange between the evaporator and the air inside the refrigerator may decrease.

In order to solve such problem, generally, a heater may be provided on a side of the evaporator, thereby melting the frost (e.g., defrosting).

However, the conventional defrosting method, as mentioned above, leads to increased power consumption, and increase the potential risk of fire due to the heater therein. Furthermore, additional components, for example, a bi-metal, a thermal fuse, etc. may be necessary for fire prevention, increasing the cost of materials.

### SUMMARY

The present disclosure has been made in effort to provide a cooling apparatus of a refrigerator capable of defrosting without a heater and a control method thereof.

The cooling apparatus in accordance with embodiments of the present disclosure may comprises a compressor configured to compress a refrigerant, a condenser configured to condense the compressed refrigerant, a decompressor configured to decompress the condensed refrigerant, an evaporator configured to evaporate the decompressed refrigerant and generate cold air for the refrigerator, a defrosting flow path that comprises a first end connected to a refrigerant flow path between the compressor and a second end connected to the refrigerant flow path between the decompressor and the evaporator, and a flow path switching valve configured to selectively direct the compressed refrigerant from the compressor to the defrosting flow path or the condenser.

The flow path switching valve may be configured to direct the compressed refrigerant to the condenser during cooling of the refrigerator, and to the defrosting flow path during defrosting of the evaporator, thereby directing the compressed refrigerant to the evaporator without passing through the condenser and the decompressor.

The compressor may be an inverter compressor. When the flow path switching valve directs the compressed refrigerant to the defrosting flow path, the inverter compressor is configured to control at least one of the temperature of the compressed refrigerant and the supply speed or rate of the compressed refrigerant to the defrosting flow path by controlling a driving rate (e.g., in revolutions per minute, or RPM) thereof.

The cooling apparatus in accordance with another embodiment of the present disclosure may comprise a compressor configured to compress a refrigerant, a condenser configured to condense the compressed refrigerant, a first decompressor and a second decompressor configured to decompress a portion of or all of the condensed refrigerant, respectively, a first evaporator configured to evaporate the decompressed refrigerant from the first decompressor, and generate cold air for a refrigeration compartment, a second evaporator configured to evaporate the decompressed refrigerant supplied from the second decompressor, and generate cold air for a freezer compartment, a defrosting flow path that comprises an end (e.g., first end) connected to a first refrigerant flow path between the compressor and the condenser, and another end (e.g., a second end) connected to a second refrigerant flow path between the first evaporator and the first decompressor or connected to a third refrigerant flow path between the second evaporator and the second decompressor, and a first flow path switching valve configured to direct a portion of or all of the compressed refrigerant from the compressor to at least one of the defrosting flow path and the condenser.

When defrosting the first evaporator and cooling the freezer, the second end of the defrosting flow path is connected to the refrigerant flow path between the first evaporator and the first decompressor. The first flow path switching valve, by directing a portion of the compressed refrigerant to the defrosting flow path, directs the portion of the compressed refrigerant to the first evaporator without passing through the condenser and the first decompressor. The remaining refrigerant is directed to the condenser, and the remaining compressed refrigerant is directed to the second evaporator through the condenser and the second decompressor.

The cooling apparatus may further comprise a second flow path switching valve between the condenser and the first and second decompressors that directs the remaining compressed refrigerant from the condenser to the second decompressor.

When cooling the refrigeration compartment and defrosting the second evaporator, the second end of the defrosting flow path is connected to the refrigerant flow path between the second evaporator and the second decompressor. The first flow path switching valve, by directing a portion of the compressed refrigerant to the defrosting flow path, directs the portion of the compressed refrigerant to the second evaporator without passing through the condenser and the second decompressor. The remaining compressed refrigerant is directed to the condenser, and the remaining compressed refrigerant is directed to the first evaporator through the condenser and the first decompressor.

The cooling apparatus may further comprise a second flow path switching valve between the condenser and the first and second decompressors, and directs the remaining compressed refrigerant passed through the condenser to the first decompressor.

The first flow path switching valve may direct all the compressed refrigerant to the defrosting flow path. The cooling apparatus may further comprise a third flow path switching valve on the defrosting flow path and configured to direct a portion of the compressed refrigerant directed to the defrosting flow path to the second evaporator. A fourth flow path switching valve may be on the defrosting flow path, configured to direct the remaining compressed refrigerant directed to the defrosting flow path to the first evaporator.

The control method for controlling the cooling apparatus of the refrigerator in accordance with one embodiment of the present disclosure may comprise determining whether to defrost the evaporator, and supplying a refrigerant from the compressor to the evaporator directly to defrost the evaporator

The control method may further comprise determining whether the evaporator has been completely defrosted; and directing the refrigerant from the compressor to the condenser when the evaporator has been completely defrosted.

The cooling apparatus of the refrigerator may comprise a defrosting flow path having an end (e.g., a first end) connected to a refrigerant flow path between the compressor and the condenser, and another end (e.g., a second end) connected to the refrigerant flow path between the decompressor and the evaporator, and a flow path switching valve configured to selectively direct the compressed refrigerant supplied from the compressor to the defrosting flow path or the condenser.

The compressor may be an inverter compressor, and the control method may further comprise controlling a driving rate of the inverter compressor when defrosting the evaporator.

At least one of (i) a temperature of the compressed refrigerant and (ii) a supply speed or rate of the compressed refrigerant directly to the evaporator may be controlled by the driving rate of the inverter compressor.

As a result, it is possible to provide a cooling apparatus of a refrigerator and a control method thereof capable of defrosting an evaporator without an external heater.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a side cross-sectional view of a conventional refrigerator.
FIG. 2 illustrates a view of a cooling apparatus of a refrigerator during the cooling process in accordance with embodiments of the present disclosure.
FIG. 3 illustrates a view of the exemplary cooling apparatus of a refrigerator during the defrosting process in accordance with the embodiment, as shown in FIG. 1.
FIG. 4 illustrates a view of an exemplary cooling apparatus of a refrigerator during the cooling process in accordance with other embodiments of the present disclosure.
FIG. 5 illustrates a view of the exemplary cooling apparatus of a refrigerator during the defrosting process in accordance with the embodiments, as shown in FIG. 4.
FIG. 6 illustrates a view of the exemplary cooling apparatus of the refrigerator during the defrosting process in accordance with other embodiments.
FIG. 7 is a block diagram illustrating controlling the exemplary cooling apparatus of the refrigerator in accordance with the embodiments, as shown in FIG. 3.
FIG. 8 is a flow chart illustrating an exemplary method for controlling a cooling apparatus of a refrigerator in accordance with embodiments of the present disclosure.

### DETAILED DESCRIPTION

In the following detailed description, reference is made to the accompanying drawings, which form a part hereof. The illustrative embodiments described in the detailed description, drawings, and claims are not meant to be limiting. Other embodiments may be utilized, and other changes may be made, without departing from the spirit or scope of the subject matter presented here.

Hereinafter, exemplary embodiments according to the present disclosure will be described in detail with reference to the accompanying drawings. Various configurations of the present disclosure, and operations and/or effects according to the configurations of the present disclosure, will be clearly understood by the detailed description below.

It should be noted that the drawings are schematically provided and not necessarily to scaled. The relative dimensions and ratios of the parts illustrated in the drawings may be exaggerated or reduced in size for clarity and convenience in the drawings, and the dimensions are only examples without limitation. In the following description, the same elements will be designated by the same reference numerals although the elements are illustrated in different drawings, and a detailed explanation of known related constitutions may be omitted so as to avoid unnecessarily obscuring the subject matter of the present disclosure.

Exemplary embodiments of the present disclosure show ideal examples of the present disclosure. Accordingly, the exemplary embodiments shown in the drawings are expected to be changed in various ways. Therefore, the exemplary embodiments are not limited to specific configurations in the drawings, and may be changed to have various shapes and/or arrangements by manufacturing.

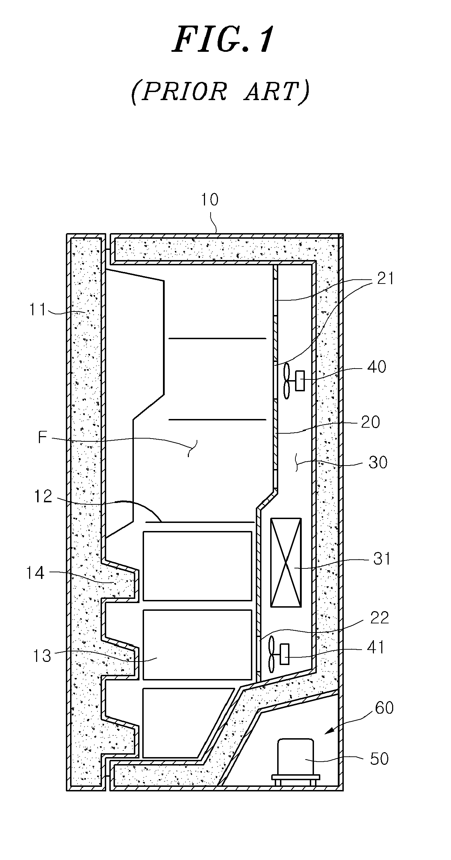

FIG. 1 illustrates a side cross-sectional view of a conventional refrigerator. Specifically, FIG. 1 shows a freezer compartment of a side by side type (SBS) refrigerator and freezer.

The refrigerator may include a main body 10 having a refrigeration compartment and a freezer F therein, a rotatable door at the front of the main body 10 to close the refrigeration compartment, and a rotatable door 11 at the front of the main body 10 to close the freezer F.

A plurality of shelves 12 and a plurality of storage boxes or bins 13 may be in the freezer F, and also a plurality of baskets, shelves or trays 14 for storing food may be on the inside surface of the door 11 of the freezer.

Using such food storage components 12, 13 and 14, a user is capable of effectively keeping the food in any space in the refrigerator.

A barrier wall 20 may be at the rear of the freezer F, thereby defining a cold air generating compartment 30. An evaporator 31 may be in the cold air generating compartment 30 to generate cold air by heat exchange between a refrigerant and air inside the refrigerator. Furthermore, a fan (e.g., a blast fan) 40 may be above the evaporator 31 to provide and/or force convection of the cold air generated by the evaporator 31 into the freezer F. Furthermore, one or more cold air outlets 21 may be provided in the barrier wall 20 to allow cold air in the evaporator 31 to pass through to the freezer F. To discharge the cold air smoothly, a plurality of cold air outlets 21 may be provided. In addition, a cold air inlet 22 may in the lower part or side of the barrier wall 20 to circulate the cold air from the freezer F to the evaporator 31 again. Behind the cold air inlet 22, there may be another fan (e.g., a suction fan) 41 configured to pull cold air into the cold air generating compartment 30.

In the lower side of the refrigerator, a machine room 60 may include and/or house a compressor 50, a condenser (not shown) and a decompressor (not shown), and optionally, one or more other cooling cycle constituents.

With the configuration as mentioned above, the cold air generated in the evaporator 31 may be discharged to the inside of the freezer F through the cold air outlet 21, and the cold air may refrigerate and/or freeze the food stored inside the freezer compartment F, then may be transferred to the evaporator 31 through the cold air inlet 22.

The term "a cooling apparatus of the refrigerator" (hereinafter called to as a cooling apparatus) used herein is understood in a wide conceptual sense, comprising all the possible constructions having a function of refrigerating a space inside the refrigerator. For example, the cooling apparatus may include the components of the cooling cycle, the blast fan 40, the suction fan 41, the cold air generating compartment 30, the cold air outlet 21, the cold air inlet 22, and the machine room 60.

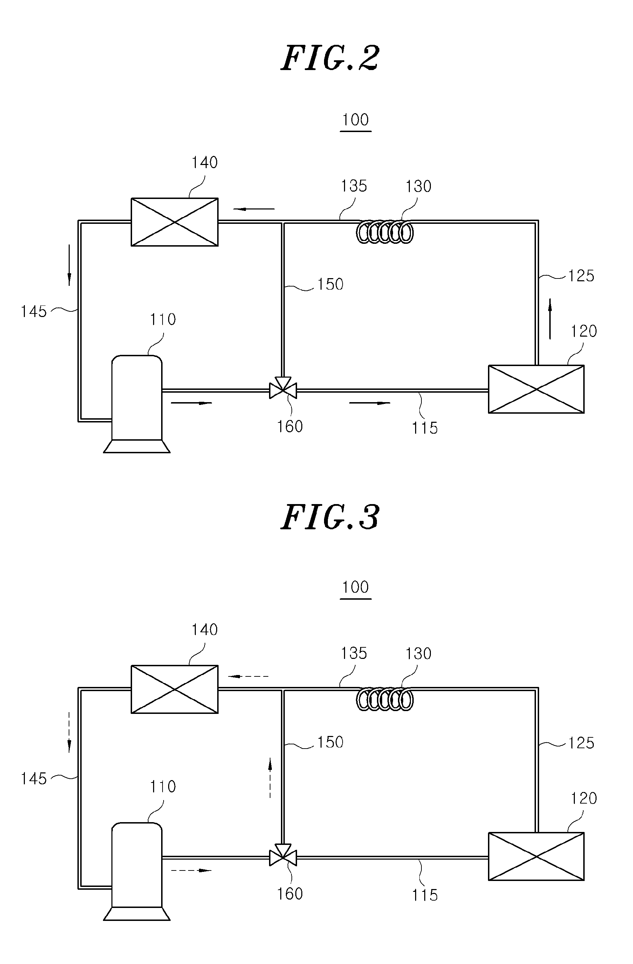

FIG. 2 shows a view of an exemplary cooling apparatus 100 during the cooling process in accordance with embodiments of the present disclosure.

As shown in FIG. 2, the cooling apparatus 100 in accordance with the embodiments of the present disclosure may include a compressor 110, a condenser 120, a decompressor 130 and an evaporator 140. The compressor 110 and the condenser 120 may be connected each other via a first flow path 115. The condenser 120 and the decompressor 130 may be connected to each other via a second flow path 125. The decompressor 130 and the evaporator 140 may be connected to each other via a third flow path 135. Further, the evaporator 140 and the compressor 110 may be connected to each other via a fourth flow path 145.

The decompressor 130 is described and shown herein as a capillary tube type, but is not limited thereto, and may be an expansion valve type.

The refrigerant compressed with high temperature and high pressure in the compressor 110 may be supplied to the condenser 120 via the first flow path 115. The compressed refrigerant supplied to the condenser 120 may be liquefied by releasing heat during the course of passage through the condenser 120. The refrigerant condensed in the condenser 120 may be supplied to the decompressor 130 via the second flow path 125, and the condensed refrigerant may be reduced in pressure during the course of passage through the decompressor 130. The liquefied low-temperature and low-pressure refrigerant may be supplied to the evaporator 140 via the third flow path 135. The liquefied low-temperature and low-pressure refrigerant may be vaporized by absorbing heat from the surroundings during the course of passage through the evaporator 140. Therefore, the air surrounding the evaporator 140 loses heat and becomes cold air. The cold air generated may be supplied to inside the refrigerator. The refrigerant passed through the evaporator 140 may be returned to the compressor 110.

Unlike defrosting utilizing a heater, the cooling apparatus 100 in accordance with embodiments of the present disclosure may execute defrosting utilizing the high-temperature refrigerant compressed by the compressor 110. In addition, defrosting the evaporator using a heater placed near a refrigerator or freezer compartment may affect the state and/or quality of food in the refrigerator or freezer compartment placed near the heater. Furthermore, the period of time that the high-temperature refrigerant is circulated through the evaporator to defrost the evaporator is typically much less (e.g., about 20 minutes) than the period of time that a conventional heater takes to defrost the same evaporator (e.g., about 60 minutes).

For example, the cooling apparatus 100 in accordance with the embodiments of the present disclosure may include a defrosting flow path 150 and a flow path switching valve 160. An end (e.g., a first end) of the defrosting flow path 150 may be connected to the first flow path 115 between the compressor 110 and the condenser 120, and the another end (e.g., a second end) of the defrosting flow path 150 may be connected to the third flow path 135 between the decompressor 130 and the evaporator 140. As will be described in detail with reference to FIG. 3, the refrigerant compressed in the compressor 110 may be supplied to the evaporator 140 via the defrosting flow path 150. The flow path switching valve 160 may be provided on the first flow path 115. The flow path switching valve 160 may lead the compressed refrigerant flowing along the first flow path 115 to the defrosting flow path 150 or the condenser 120 selectively. As will be described in detail with reference to FIG. 3, when defrosting the evaporator 140, the flow path switching valve 160 may lead the refrigerant compressed in the compressor 110 to the defrosting flow path 150 instead of the condenser 120. The flow path switching valve 160 may be a 3-way valve.

Referring to FIG. 2, the exemplary cooling apparatus 100 is operated for cooling a space inside the refrigerator. The flow path switching valve 160 may close the first end of the defrosting flow path 150 and open the first flow path 115, thereby allowing the refrigerant compressed in the compressor 110 to flow to the condenser 120 along the first flow path 115. The refrigerant arrived at the condenser 120 passes through the decompressor 130 and the evaporator 140, thereby further lowering the temperature inside the refrigerator.

As shown in FIG. 2, a part of the third flow path 135 may be connected to the second end of the defrosting flow path 150. In this case, the first end of the defrosting flow path 150 is closed by the flow path switching valve 160, and the pressure on the side of the evaporator 140 is lower than the pressure inside the defrosting flow path 150, the refrigerant flowing toward the evaporator 140 along the third flow path 135 is prevented to flow backward to the defrosting flow path 150.

FIG. 3 shows a view of the exemplary cooling apparatus 100 during the defrosting process described.

During the course of cooling a space inside the refrigerator, when defrosting is required to remove the frost accumulated piled up on the surface of the evaporator 140, the cooling apparatus 100 in accordance with the exemplary embodiments may execute defrosting utilizing high-temperature refrigerant compressed in the compressor 110. To attain this, as aforementioned above, the cooling apparatus 100 may include the defrosting flow path 150 and the flow path switching valve 160.

For example, when defrosting, the flow path switching valve 160 provided on the first flow path 115 may close the first flow path 115 and open a first end of the defrosting flow path 150. Accordingly, the refrigerant compressed in the compressor 110 may not be directed to the condenser 120 along the first flow path 115 and instead may be directed to the defrosting flow path 150. As the compressed refrigerant does not pass through the condenser 120 and the decompressor 130, the compressed refrigerant suffers little or no temperature loss. Accordingly, even after arriving at the third flow path 135 through the defrosting flow path 150, the compressed refrigerant is capable of retaining still a high-temperature condition. The compressed refrigerant arrived at the third flow path 135 may be directed to the evaporator 140, thereby melting the frost accumulated on the evaporator 140 by thermal energy.

During the course that the compressed refrigerant flows in the third flow path 135 along the defrosting flow path 150, the flow path switching valve 160 may close the first flow path 115, and the pressure on the side of the evaporator 140 is lower than the pressure on the side of the decompressor 130. Accordingly, the compressed refrigerant may be prevented to flow backward from the third flow path 135 to the decompressor 130.

Furthermore, the compressor 110 of the cooling apparatus 100 in accordance with the embodiments of the present disclosure may be an inverter compressor. The temperature of the refrigerant used for defrosting may vary, depending on the driving rate of the inverter compressor 110. When the driving rate of the inverter compressor 110 has a relatively high rate, the temperature of the refrigerant may increase. Accordingly, when the temperature of the refrigerant compressed in the inverter compressor 110 having a relatively high driving rate increases, the time for defrosting also may be reduced. Furthermore, as the refrigerant may be directed to the defrosting flow path 150 by controlling the driving rate of the inverter compressor 110, a speed of supplying the refrigerant to the evaporator 140 may also be controlled. The supply speed of the refrigerant to the evaporator 140 may be controlled by controlling the driving rate of the inverter compressor 110, thereby efficiently defrosting the refrigerator.

Contrary to a conventional cooling apparatus that utilizes a heater, the cooling apparatus 100 in accordance with the embodiments of the present disclosure utilizes a method in which the high-temperature refrigerant compressed in the compressor 110 is supplied to the evaporator 140. Accordingly, electric power consumption and the potential risk of fire may be minimized. Furthermore, components for the heater, for example, a bi-metal, a thermal fuse, etc. are not required, thereby reducing the cost of materials.

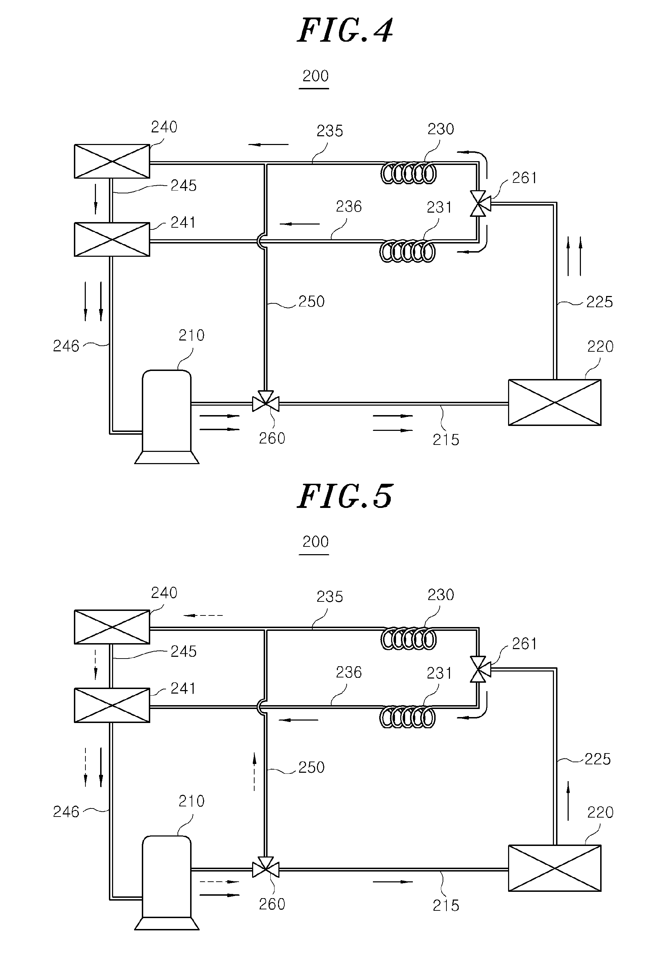

Referring to FIG. 4, an exemplary cooling apparatus 200 during the cooling process is described, in accordance with other embodiments of the present disclosure.

Differently from the cooling apparatus 100 described with reference to FIG. 2 and FIG. 3, the cooling apparatus 200 in accordance with the exemplary embodiments are for cooling a plurality of spaces inside the refrigerator. For example, the cooling apparatus 200 in accordance with the exemplary embodiments of the present disclosure may include a first evaporator 240 and a second evaporator 241. The first evaporator 240 and the second evaporator 241 may be constructed for lowering temperatures in the refrigeration compartment and in the freezer, respectively. Accordingly, a refrigerator having the cooling apparatus 200, in accordance with the embodiments of the present disclosure may be a refrigerator of an independent cooling arrangement.

As shown in FIG. 4, the exemplary cooling apparatus 200, in accordance with the embodiments of the present disclosure may include a compressor 210, a condenser 220, a first and a second decompressor 230, 231 and the first and a second evaporator 240, 241. The compressor 210 and the condenser 220 may be connected to each other via a first flow path 215. The condenser 220 and the first and the second decompressor 230, 231 may be connected to each other via a second flow path 225. The first decompressor 230 and the first evaporator 240 may be connected to each other via a third flow path 235, and the second decompressor 231 and the second evaporator 241 may be connected to each other via the fourth flow path 236. The first evaporator 240 and the second evaporator 241 may be connected to each other via a fifth flow path 245, and the second evaporator 241 and the compressor 210 may be connected to each other via a sixth flow path 246.

A refrigerant compressed with high-temperature and high- pressure in the compressor 210 may be supplied to the condenser 220 via the second flow path 215. The compressed refrigerant supplied to the condenser 220 may be liquefied by releasing a thermal energy during passing through the condenser 220. The refrigerant condensed in the condenser 220 may be supplied to the decompressors 230, 231 via the second flow path 225, and the condensed refrigerant may be reduced in pressure during passing through the decompressors 230, 231. Between the second flow path 225 and the decompressors 230, 231, a second flow path switching valve 261 with, for example, 3-way type may be provided. This type of the second flow path switching valve 261 may divide the refrigerant flowing along the second flow path 225 to the first decompressor 230 and the second decompressor 231.

A first flow path switching valve 260 will be described hereinafter. The low-temperature and low-pressure liquid refrigerant from the first decompressor 230 may be supplied to the first evaporator 240 via the third flow path 225, and the low-temperature and low-pressure liquid refrigerant from the second decompressor 231 may be supplied to the second evaporator 241 via the fourth flow path 236. The low-temperature and low-pressure liquid refrigerant may absorb thermal energy from the surroundings while passing through the evaporators 240, 241, thereby being vaporized. Accordingly, the air surrounding the evaporators 240, 241 may become cold, and the cold air generated like this may be supplied to each of the refrigeration compartment and the freezer. The refrigerant passing through the first evaporator 240 may return to the compressor 210 through the second evaporator 241, and the refrigerant passing through the second evaporator 241 may be return to the compressor 210.

Similar to the previously described embodiment of the present disclosure, the cooling apparatus 200 in accordance with one or more further embodiments may include a defrosting flow path 250 and a first flow path switching valve 260. An end (e.g., a first end) of the defrosting flow path 250 may be connected to the first flow path 215 between the compressor 210 and the condenser 220, and another end (e.g., a second end) of the defrosting flow path 250 may be connected to the third flow path 235 between the first decompressor 230 and the first evaporator 240. As will be described hereafter in detail with reference to FIG. 5, the refrigerant compressed in the compressor 210 may be supplied to the first evaporator 240 via the defrosting flow path 250. The first flow path switching valve 260 may be provided on the first flow path 215. By operation of the first flow path switching valve 260, some or the entire of the compressed refrigerant flowing along the first flow path 215 may be directed to the defrosting flow path 250. The first flow path switching valve may be a 3-way valve.

Referring to FIG. 4, the cooling apparatus 200 is operated for cooling the refrigeration compartment and the freezer. The first flow path switching valve 260 may close a first end of the defrosting flow path 250 and may open the first flow path 215. With this configuration, the refrigerant compressed in the compressor 210 may be directed to the condenser 220 along the first flow path 215. As the refrigerant arrived at the condenser 220 passes through the decompressors 230, 231 and the evaporators 240, 241, temperatures inside the refrigeration compartment and the freezer may decrease.

FIG. 5 shows a view of the first evaporation 240 during the defrosting process in accordance with the embodiments of the present disclosure described with reference to FIG. 4.

For example, when defrosting the first evaporator 240, but operating the second evaporator 241 for cooling the freezer, the first flow path switching valve 260 in the first flow path 215 may open both the first flow path and an end of the defrosting flow path 250. Accordingly, some of the refrigerant compressed in the compressor 210 may be directed to the defrosting flow path 250, and the remaining refrigerant may be directed to the first flow path 215. A portion of the compressed refrigerant directed to the defrosting flow path 250 may flow in the third flow path 235 and then may be supplied to the first evaporator 240. The frost accumulated on the first evaporator 240 may be melt from the thermal energy of the portion of the compressed refrigerant. Similarly, like the previously described embodiments with reference to FIG. 4, the remaining of the compressed refrigerant may be supplied to the second evaporator 241 through the condenser 220 and the second decompressor 231. The second flow path switching valve 261 may close the flow path toward the first decompressor 230, thereby directing all the refrigerant arrived at the second flow path switching valve 261 to the second decompressor 231. Accordingly, defrosting the first evaporator 240 and continuous cooling for the freezer may be executed at the same time.

When defrosting the first evaporator 240 and not operating the second evaporator 241 because the freezer is fully cooled down, the first flow path switching valve 260 may direct all the refrigerant from the compressor 210 to the defrosting flow path 250.

As described so far, according to the cooling apparatus 200 in accordance with the embodiments of the present disclosure, when defrosting the first evaporator 240 only, defrosting the first evaporator 240 may be executed, and the second evaporator 241 may be operated or stopped depending on the need, thereby enabling the cooling apparatus 200 to operate efficiently.

The cooling apparatus 200 in accordance with exemplary embodiments is expected to defrost the first evaporator 240, and defrosting the second evaporator 241 may be considered as additional embodiments. For example, while defrosting the second evaporator 241, the first evaporator 240 may be continuously operated or stopped. Thus, the second end of the defrosting flow path 250 may be connected to the fourth flow path 236 instead of the third flow path 235. Furthermore, separate defrosting flow paths to each of the first and second evaporators (via third and fourth flow paths) can be operated independently, using separate valves in the first flow path (e.g., 215).

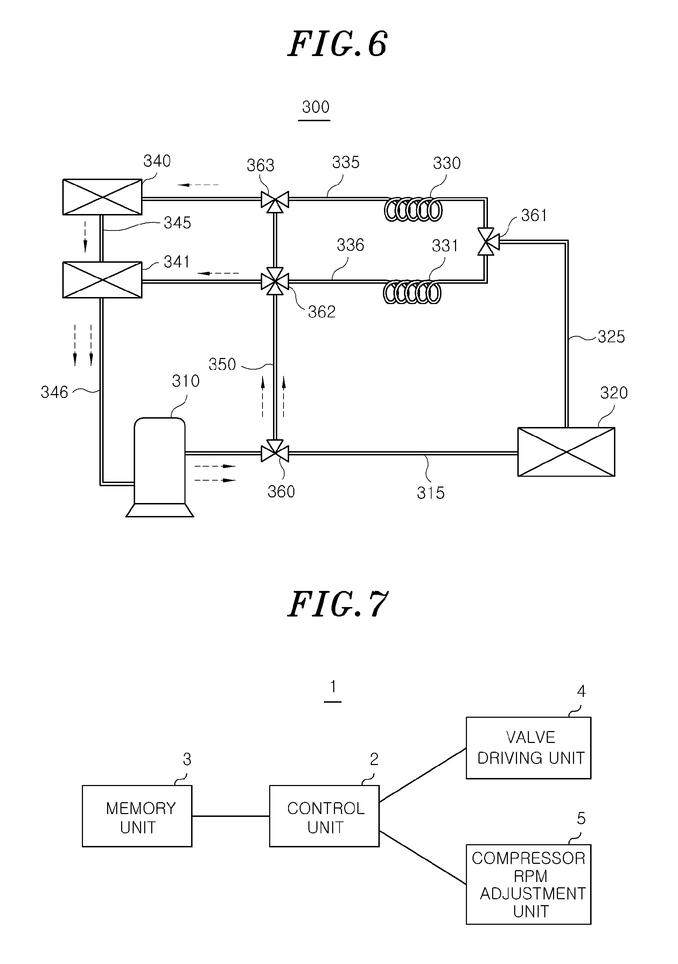

FIG. 6 shows a view of an exemplary cooling apparatus 300 during the defrosting process in accordance with another embodiment is depicted. From the view point of difference between the cooling apparatus 300 in accordance with the embodiment and the cooling apparatus 200 previously described herein, the cooling apparatus 300 in accordance with the embodiments of the present apparatus is capable of defrosting both a first evaporator 340 and a second evaporator 341 at the same time. A defrosting flow path 350 may be connected to both a third flow path 335 and a fourth flow path 336, and a third flow path switching valve 362 may be in the connection between the defrosting flow path 350 and the fourth flow path 336. A fourth flow path switching valve 363 may be in the connection location between the defrosting flow path 350 and the third flow path 335.

All of the refrigerant from the compressor 310 may be directed to the defrosting flow path 350 by a first flow path switching valve 360, and some of the refrigerant flowing along the defrosting flow path 350 may be supplied to the second evaporator 341 via the fourth flow path 336. The third flow path switching valve 362 may be 4-way valve and may open both of the defrosting flow path 350 and the fourth flow path 336 so that some of the refrigerant can flow in the fourth flow path 336. Alternatively, the third flow path switching valve 362 may close only a flow toward the second decompressor 331. In the refrigerant flowing in the defrosting flow path 350, the remaining refrigerant except for some amount of the refrigerant supplied to the second evaporator 341 may pass through the third flow path switching valve 362 and then may be supplied to the first evaporator 340. When the remaining arrives at the third flow path 335, the fourth flow path switching valve 363 may open the third flow path 335, thereby directing the remaining refrigerant toward the first evaporator 340. Alternatively, the fourth flow path switching valve 363 may close the flow toward the first decompressor 330.

When one of the refrigeration compartment and the freezer is cooled, and thus a corresponding one of the first evaporator 340 and the second evaporator 341 is operating, the first flow path switching valve 360 may open the first flow path 315. Some of the refrigerant from the compressor 310 may be directed to the defrosting flow path 350 for defrosting the second evaporator 341 (or the first evaporator 340), and the remaining compressed refrigerant may be supplied to the first evaporator 340 (or the second evaporator 341) through the first decompressor 330 (or the second decompressor 331).

According to the cooling apparatus 300 in accordance with exemplary embodiments, when defrosting the first evaporator 340 and/or the second evaporator 341, cooling a space with the other one which is not being defrosted may be continuously executed. Furthermore, depending on the need, defrosting the first evaporator 340 and the second evaporator 341 may be executed simultaneously.

FIG. 7 is a block diagram illustrating one example of a module 1 for controlling the exemplary cooling apparatus 100 of the refrigerator in accordance of the embodiment with described in FIG. 3. As shown, a control unit 2, a memory unit 3, a valve driving unit 4, and a compressor RPM adjustment unit 5 may control the cooling apparatus 100 of the refrigerator.

The memory unit 3 may store various conditions for defrosting of the evaporator 140. For example, in case where the temperature inside the refrigerator drops below a prescribed temperature, or when cooling the refrigerator takes longer than a prescribed time, a defrosting process for the evaporator 140 may be executed. The memory unit 3 may store such conditions, for example, defrosting starting temperature, period of defrosting and so on. The control unit 2 may load such conditions from the memory unit 3 and may take an action for starting the defrosting for the evaporator 140. For example, when such conditions are satisfied, the control unit 2 may be previously set to automatically carry out the defrosting process.

When it is determined that defrosting the evaporator 140 is to be executed, the control unit 2 may cause the valve driving unit 4 to drive or switch the flow path switching valve 160. The flow path switching valve 160 may close the first flow path 115 and may then open a first end of the defrosting flow path 150, thereby directing the high-temperature refrigerant from the compressor 110 to the defrosting flow path 150.

When the compressor 110 is an inverter compressor, the compressor rate (e.g., RPM) adjustment unit 5 may control the driving rate to adjust the temperature of the refrigerant for defrosting, and also to adjust a speed of the refrigerant supply to the evaporator 140.

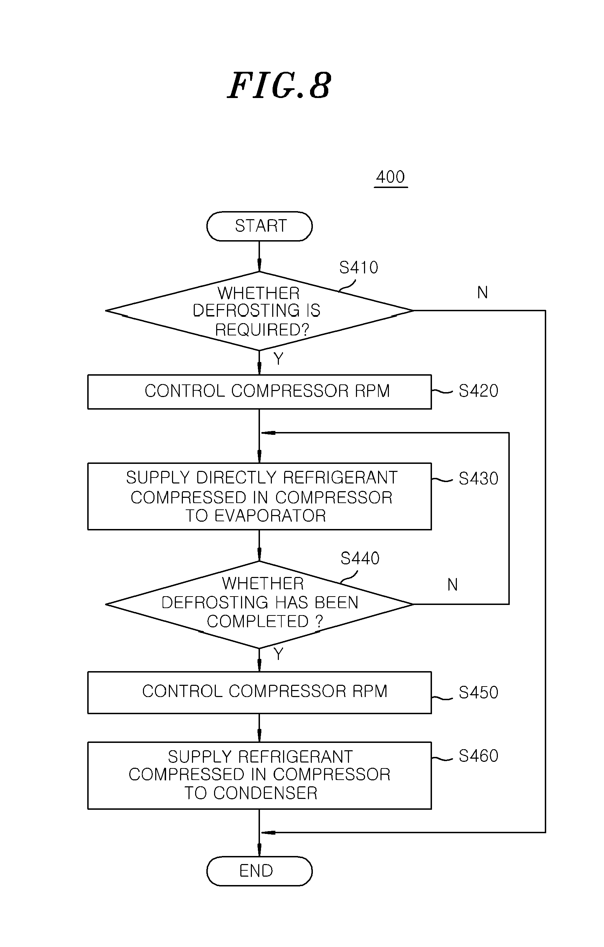

FIG. 8 is a flow chart illustrating an exemplary control method 400 for the cooling apparatus of the refrigerator in accordance with embodiments of the present disclosure.

In block S410, it may be determined whether to defrost for the evaporator 140. The control unit 2 may load various conditions for defrosting from the memory unit 3 and may detect whether such (various) conditions are satisfied or not, and with this may determine whether to defrosting or not.

If it is determined to defrost, when the compressor 110 is an inverter compressor, in block S420, the control unit 2 may control the driving rate of the inverter compressor 110 using the compressor RPM adjustment unit 5, thereby providing a refrigerant with a suitable temperature and supply speed for the relevant defrosting.

In block S430, the high-temperature refrigerant from the compressor 110 may be directly supplied to the evaporator 140. To achieve this, the control unit 2 may cause the flow path switching valve 160 to close the first flow path 115 and to open the first end of the defrosting flow path 150 with the valve driving unit 4.

During the defrosting of the evaporator 140, in block S440, the control unit 2 may detect whether the defrosting is complete or not. If defrosting is not complete, the method returns to block S430 and continues supplying the high-temperature refrigerant directly to the evaporator 140.

When the defrosting is completed, in block S450, the control unit 2 may control the driving rate of the compressor 110 with the compressor rate adjustment unit 5 to supply the refrigerant with a temperature and a supply speed suitable for cooling the refrigerator.

Subsequently, in block S460, the high-temperature refrigerant from the compressor 110 may be supplied to the condenser 120 and may arrive at the evaporator 140 through the decompressor 130. To achieve this, the control unit 2 may cause the flow path switching valve 160 to close the first end of the defrosting flow path 150 and to open the first flow path 115 by the valve driving unit 4.

Although exemplary embodiments of the present disclosure are described above with reference to the accompanying drawings, those skilled in the art would understand that the present disclosure may be implemented in various ways without changing the necessary features or the spirit of the present disclosure.

Therefore, it should be understood that the exemplary embodiments described above are not limiting, but only an example in all respects. The scope of the present disclosure is expressed by claims described below, not the detailed description, and it should be construed that all of changes and modifications achieved from the meanings and scope of claims and equivalent concepts are included in the scope of the present disclosure.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A cooling apparatus for a refrigerator, comprising:
a compressor configured to compress a refrigerant;
a condenser configured to condense the compressed refrigerant;
a decompressor configured to decompress the condensed refrigerant;
an evaporator configured to evaporate the decompressed refrigerant and generate cold air inside the refrigerator;
a defrosting flow path, comprising a first end connected to a refrigerant flow path between the compressor and the condenser, and a second end connected to the refrigerant flow path between the decompressor and the evaporator; and
a flow path switching valve configured to selectively direct the compressed refrigerant from the compressor to the defrosting flow path or to the condenser.

2. The cooling apparatus of claim 1, wherein the flow path switching valve is further configured to direct the compressed refrigerant to the condenser while cooling the refrigerator, and to the defrosting flow path while defrosting the evaporator without passing through the condenser and the decompressor.

3. The cooling apparatus of claim 1, wherein the compressor comprises an inverter compressor.

4. The cooling apparatus of claim 3, wherein the inverter compressor is configured to control at least one of the temperature of the compressed refrigerant and the supply speed of the compressed refrigerant to the defrosting flow path.

5. A cooling apparatus for a refrigerator, comprising:
a compressor configured to compress a refrigerant;
a condenser configured to condense the compressed refrigerant;
a first decompressor and a second decompressor configured to decompress a portion of or an entire amount of condensed refrigerant, respectively;
a first evaporator configured to evaporate the decompressed refrigerant from the first decompressor and generate cold air for a refrigeration compartment;
a second evaporator configured to evaporate the decompressed refrigerant from the second decompressor and generate cold air for a freezer;
a defrosting flow path comprising a first end connected to a first refrigerant flow path between the compressor and the condenser, and a second end connected to a refrigerant flow path between the first evaporator and the first decompressor or a third refrigerant flow path between the second evaporator and the second decompressor; and
a first flow path switching valve configured to direct a portion or an entire amount of compressed refrigerant from the compressor to at least one of the defrosting flow path and the condenser.

6. The cooling apparatus of claim 5, wherein when defrosting the first evaporator and cooling the freezer,
the second end of the defrosting flow path is connected to a refrigerant flow path; and
the first flow path switching valve directs a portion of the compressed refrigerant to the defrosting flow path and to the first evaporator without passing through the condenser and the first decompressor, and directs the remaining compressed refrigerant to the second evaporator through the condenser and the second decompressor.

7. The cooling apparatus of claim 5, further comprising:
a second flow path switching valve between the condenser and the first and second decompressors that directs the remaining compressed refrigerant from the condenser to the second decompressor.

8. The cooling apparatus of claim 5, wherein when cooling the refrigeration compartment and defrosting the second evaporator,
the second end of the defrosting flow path is connected to the third refrigerant flow path, and
the first flow path switching valve directs a portion of the compressed refrigerant to the defrosting flow path and to the second evaporator without passing through the condenser and the second decompressor, and directs the remaining compressed refrigerant to the first evaporator through the condenser and the first decompressor.

9. The cooling apparatus of claim 8, further comprising:
a second flow path switching valve between the condenser and the first and second decompressors, that directs the remaining compressed refrigerant passed through the condenser to the first decompressor.

10. The cooling apparatus of claim 5, wherein the first flow path switching valve directs all the compressed refrigerant to the defrosting flow path, and the cooling apparatus further comprises:
a third flow path switching valve on the defrosting flow path and configured to direct a portion of the compressed refrigerant directed to the defrosting flow path to the second evaporator; and
a fourth flow path switching valve on the defrosting flow path and configured to direct the remaining compressed refrigerant directed to the defrosting flow path to the first evaporator.

11. A method for controlling a cooling apparatus of a refrigerator having a cooling cycle including a compressor, a condenser, a decompressor and an evaporator, the method comprising:
determining whether to defrost the evaporator; and
supplying a refrigerant from the compressor to the evaporator directly when defrosting the evaporator.

12. The method of claim 11, further comprising:
detecting whether the evaporator has been completely defrosted; and
directing the refrigerant from the compressor to the condenser when the evaporator has been completely defrosted.

13. The method of claim 12, wherein the cooling apparatus comprises:
a defrosting flow path, having a first end connected to a first refrigerant flow path between the compressor and the condenser and a second end connected to a second refrigerant flow path between the decompressor and the evaporator; and
a flow path switching valve configured to selectively direct the compressed refrigerant from the compressor to the defrosting flow path or to the condenser.

14. The method of claim 11, wherein the compressor comprises an inverter compressor, and
the method further comprises controlling a driving rate of the inverter compressor when defrosting the evaporator.

15. The method of claim 14, wherein controlling the driving rate comprises controlling at least one of a temperature of the compressed refrigerant and a supply rate of the compressed refrigerant to the evaporator.
